# EUROPÄISCHE PATENTSCHRIFT

(11) **EP 2 652 365 B1**
(45) Veröffentlichungstag und Bekanntmachung des Hinweises auf die Patenterteilung: **14.01.2015**
(21) Anmeldenummer: 11781783.3
(22) Anmeldetag: 07.11.2011
(51) Int. Cl.: F16H 61/06

(54) **VERFAHREN ZUM BETREIBEN EINER GETRIEBEVORRICHTUNG EINES FAHRZEUGANTRIEBSSTRANGES MIT WENIGSTENS EINEM FORMSCHLÜSSIGEN SCHALTELEMENT UND MIT MEHREREN REIBSCHLÜSSIGEN SCHALTELEMENTEN**
METHOD FOR THE OPERATION OF A TRANSMISSION DEVICE IN A VEHICLE DRIVE TRAIN, COMPRISING AT LEAST ONE FORM-FITTING SHIFTING ELEMENT AND MULTIPLE FRICTIONALLY ENGAGED SHIFTING ELEMENTS
PROCÉDÉ PERMETTANT DE FAIRE FONCTIONNER UN DISPOSITIF DE TRANSMISSION DE LA CHAÎNE CINÉMATIQUE D'UN VÉHICULE, COMPORTANT AU MOINS UN ÉLÉMENT DE CHANGEMENT DE VITESSE À COMPLÉMENTARITÉ DE FORME ET PLUSIEURS ÉLÉMENTS DE CHANGEMENT DE VITESSE À FRICTION

(30) Priorität: 14.12.2010 DE 102010063028
(43) Veröffentlichungstag der Anmeldung: 23.10.2013
(73) Patentinhaber: ZF Friedrichshafen AG, 88038 Friedrichshafen (DE)
(72) Erfinder: MIHATSCH, Georg, 88131 Lindau (DE); ARNOLD, Jörg, 88090 Immenstaad (DE); HERBETH, Valentine, 88046 Friedrichshafen (DE)
(86) Internationale Anmeldenummer: PCT/EP2011/069555
(87) Internationale Veröffentlichungsnummer: WO 2012/079845

(56) Entgegenhaltungen:
- WO-A1-2006/074707
- WO-A1-2010/115806
- DE-A1-102008 000 429
- DE-A1-102008 001 567
- DE-A1-102009 017 226
- US-A1- 2004 152 563

## Beschreibung

Die Erfindung betrifft ein Verfahren zum Betreiben einer Getriebevorrichtung eines Fahrzeugantriebsstranges mit wenigstens einem formschlüssigen Schaltelement und mit mehreren reibschlüssigen Schaltelementen gemäß der im Oberbegriff des Patentanspruches 1 näher definierten Art.

Aus der DE 10 2005 002 337 A1 ist eine als 8-Gang-Mehrstufengetriebe ausgeführte Getriebevorrichtung mit reibschlüssigen Schaltelementen, wie Lamellenkupplungen und Lamellenbremsen, bekannt. Bei Vorliegen einer Schaltanforderung für einen Übersetzungswechsel in der Getriebevorrichtung ist wenigstens ein reibschlüssiges Schaltelement, welches zur Darstellung der aktuell in der Getriebevorrichtung eingelegten Ist-Übersetzung in den Kraftfluss der Getriebevorrichtung zugeschaltet ist, aus dem Kraftfluss der Getriebevorrichtung abzuschalten, während wenigstens ein weiteres reibschlüssiges Schaltelement, welches während der Darstellung der aktuell in der Getriebevorrichtung eingelegten Ist-Übersetzung aus dem Kraftfluss der Getriebevorrichtung abgeschaltet ist, zur Darstellung der angeforderten Ist-Übersetzung in den Kraftfluss der Getriebevorrichtung zuzuschalten ist.

Dabei wird das über das zur Darstellung der aktuellen Ist-Übersetzung der Getriebevorrichtung in den Kraftfluss zugeschaltete reibschlüssige Schaltelement geführte Drehmoment mit zunehmender Schaltzeit mehr oder weniger von dem zur Darstellung der angeforderten Ziel-Übersetzungen in den Kraftfluss der Getriebevorrichtung zuzuschaltenden reibschlüssigen Schaltelement übertragen, während das über das abzuschaltende Schaltelement führbare Drehmoment abnimmt.

Nachteilhafterweise verursachen reibschlüssige Schaltelemente in geöffnetem Betriebszustand Schleppmomente, welche einen Gesamtwirkungsgrad eines Automatgetriebes in unerwünschtem Umfang beeinträchtigen.

Aus diesem Grund werden Getriebevorrichtungen, wie aus der als nächstliegender Stand der Technik angesehenen DE 10 2008 000 429 A1 bekannt, in zunehmendem Umfang neben reibschlüssigen Schaltelementen auch mit formschlüssigen Schaltelementen ausgeführt, in deren Bereich keine den Gesamtwirkungsgrad einer Getriebevorrichtung beeinträchtigende Schleppmomente auftreten.

Dabei ist jedoch zu berücksichtigen, dass formschlüssige Schaltelemente nur nahe ihres Synchronpunktes aus einem geöffneten Betriebszustand, in welchem kein Drehmoment über die formschlüssigen Schaltelemente führbar ist, in ihren geschlossenen Betriebszustand, in dem das gesamte anliegende Drehmoment über die formschlüssigen Schaltelemente führbar ist, umschaltbar sind. Zusätzlich sind in den Kraftfluss einer Getriebevorrichtung zugeschaltete formschlüssige Schaltelemente mit geringen Schaltkräften nur nahe ihres lastfreien Betriebszustandes aus dem Kraftfluss abschaltbar. Sowohl zum Synchronisieren von formschlüssigen Schaltelementen als auch zum Überführen formschlüssiger Schaltelemente in ihren lastfreien Zustand sind im Gegensatz zu reibschlüssigen Schaltelementen zusätzliche konstruktive Einrichtungen erforderlich, um Schaltungen in Getriebevorrichtungen, an welchen wenigstens ein formschlüssiges Schaltelement beteiligt ist, innerhalb gewünschter Schaltzeiten durchführen zu können.

Um mit den letztbeschriebenen Getriebevorrichtungen jeweils einen angeforderten Übersetzungswechsel ausgehend von einer Ist-Übersetzung in Richtung einer Ziel-Übersetzung, zu dessen Umsetzung ein formschlüssiges Schaltelement aus seinem geschlossenen Betriebszustand in seinen geöffneten Betriebszustand und gleichzeitig ein reibschlüssiges Schaltelement aus seinem geöffneten Betriebszustand in seinen geschlossenen Betriebszustand zu überführen ist, in gewünschtem Umfang mit einer hohen Schaltgüte bzw. einem hohen Schaltkomfort realisieren zu können, ist das abzuschaltende formschlüssige Schaltelement zum richtigen Zeitpunkt, d. h. innerhalb eines Betriebszustandsfensters, zu dem ein am formschlüssigen Schaltelement anliegendes Drehmoment im Wesentlichen wenigstens annähernd gleich Null ist, zu öffnen.

Wird das formschlüssige Schaltelement beispielsweise durch eine zu frühe oder zu späte Betätigung des formschlüssigen Schaltelementes geöffnet, besteht die Möglichkeit, dass zu einem vordefinierten Soll-Öffnungszeitpunkt am formschlüssigen Schaltelement zumindest ein Teil des über die Getriebevorrichtung geführten Drehmomentes am formschlüssigen Schaltelement anliegt und durch das Öffnen des formschlüssigen Schaltelementes in einem mit der Getriebevorrichtung ausgeführten Fahrzeugantriebsstrang ungewollte Antriebsstrangreaktionen durch den schlagartigen Abbau des am formschlüssigen Schaltelement anliegenden Drehmomentes entstehen, die in Form eines für einen Fahrer eines mit dem Fahrzeugantriebsstrang ausgeführten Fahrzeuges als unangenehm spürbarer Stoß wahrgenommen werden.

Darüber hinaus besteht bei einem zu späten Auslege- bzw. Trennversuch bei einer bereits zu hoch eingestellten Übertragungsfähigkeit des zuzuschaltenden reibschlüssigen Schaltelementes die Möglichkeit, dass das formschlüssige Schaltelement nur unter Aufbringung unerwünscht hoher Schaltkräfte in seinen geöffneten Betriebszustand überführbar ist, was aufgrund von Verspannungen im Bereich der Getriebevorrichtung verursachten hohen Reibkräften zwischen den miteinander in Eingriff stehenden Schaltelementhälften des zu öffnenden formschlüssigen Schaltelementes verursacht wird.

Der vorliegenden Erfindung liegt daher die Aufgabe zugrunde, ein Verfahren zum Betreiben einer Getriebevorrichtung eines Fahrzeugantriebsstranges mit wenigstens einem formschlüssigen Schaltelement und mit mehreren reibschlüssigen Schaltelementen zur Verfügung zu stellen, mittels welchem eine Schaltgüte beeinträchtigende Betätigungen eines abzuschaltenden formschlüssigen Schaltelementes auf einfache Art und Weise vermeidbar sind.

Erfindungsgemäß wird diese Aufgabe mit einem Verfahren mit den Merkmalen des Patentanspruches 1 gelöst.

Bei dem erfindungsgemäßen Verfahren zum Betreiben einer Getriebevorrichtung eines Fahrzeugantriebsstranges mit wenigstens einem formschlüssigen Schaltelement und mit mehreren reibschlüssigen Schaltelementen, die zur Darstellung verschiedener Übersetzungen zu- oder abgeschaltet werden, soll das formschlüssige Schaltelement bei Vorliegen einer Anforderung für einen Übersetzungswechsel von einer Ist-Übersetzung in Richtung einer Ziel-Übersetzung, zu dessen Durchführung des angeforderten Übersetzungswechsels das wenigstens eine formschlüssige Schaltelement abzuschalten ist und wenigstens eines der reibschlüssigen Schaltelemente zuzuschalten ist, nach Ablauf einer vordefinierten Soll-Öffnungszeit zu einem vordefinierten Soll-Öffnungszeitpunkt in seinem geöffneten Betriebszustand vorliegen.

Erfindungsgemäß wird während der Durchführung des Übersetzungswechsels in Abhängigkeit einer Betriebszustandsgröße der Getriebevorrichtung ausgehend von einem Beginn der Betätigung des formschlüssigen Schaltelementes in Richtung seines geöffneten Betriebszustandes ein Ist-Öffnungszeitpunkt ermittelt, zu dem im Bereich des formschlüssigen Schaltelementes der angeforderte Formschluss aufgehoben ist. Der Ist-Öffnungszeitpunkt wird dem Soll-Öffnungszeitpunkt gegenübergestellt. Bei einer Abweichung zwischen dem Ist-Öffnungszeitpunkt und dem Soll-Öffnungszeitpunkt wird die Soll-Öffnungszeit um einen Zeitwert verändert und der Beginn der Betätigung des formschlüssigen Schaltelementes um den Zeitwert in Bezug auf den Soll-Öffnungszeitpunkt verschoben und/oder eine Betätigung des zuzuschaltenden Schaltelementes an einen ermittelten Betriebszustandsverlauf des abzuschaltenden formschlüssigen Schaltelementes angepasst, dass das formschlüssige Schaltelement wenigstens annähernd zum Soll-Öffnungszeitpunkt in den geöffneten Betriebszustand übergeht.

Über die erfindungsgemäße Adaption des Auslegezeitpunktes und damit des Ansteuerzeitpunktes des abzuschaltenden formschlüssigen Schaltelementes wird sichergestellt, dass ein möglichst ruckfreies Ausspuren des formschlüssigen Schaltelementes stattfindet und ein zu frühes oder zu spätes Auslegen des formschlüssigen Schaltelementes mit den daraus resultierenden und eine Schaltgüte bzw. einen Schaltkomfort beeinträchtigenden Reaktionsmomenten im Fahrzeugantriebsstrang insbesondere während Hochschaltungen vermieden wird.

Bei einer vorteilhaften Variante des erfindungsgemäßen Verfahrens wird die Soll-Öffnungszeit bei Ermitteln einer positiven Differenz zwischen dem Ist-Öffnungszeitpunkt und dem Soll-Öffnungszeitpunkt um den Zeitwert vergrößert und die Betätigung des formschlüssigen Schaltelementes wird in Bezug auf den Soll-Öffnungszeitpunkt des formschlüssigen Schaltelementes bei einem folgenden Übersetzungswechsel ausgehend von der Ist-Übersetzung in Richtung der Ziel-Übersetzung um den Zeitwert früher gestartet.

Im Gegensatz dazu wird die Soll-Öffnungszeit bei einer weiteren vorteilhaften Variante des erfindungsgemäßen Verfahrens bei Ermitteln einer negativen Differenz zwischen dem Ist-Öffnungszeitpunkt und dem Soll-Öffnungszeitpunkt um den Zeitwert verkleinert und die Betätigung des formschlüssigen Schaltelementes wird in Bezug auf den Soll-Öffnungszeitpunkt des formschlüssigen Schaltelementes bei einem folgenden Übersetzungswechsel ausgehend von der Ist-Übersetzung in Richtung der Ziel-Übersetzung um den Zeitwert später gestartet.

Bei einer mit geringem konstruktivem Aufwand durchführbaren und kostengünstig in bestehende Getriebesysteme implementierbaren weiteren Variante des erfindungsgemäßen Verfahrens wird der Ist-Öffnungszeitpunkt über eine Drehzahlsensoreinrichtung bestimmt, über die eine Getriebeeingangsdrehzahl und eine Getriebeausgangsdrehzahl ermittelbar ist, wobei der Ist-Öffnungszeitpunkt bei Vorliegen eines Quotienten zwischen der Getriebeeingangdrehzahl und der Getriebeausgangsdrehzahl, der vom Wert der Ist-Übersetzung abweicht, ermittelt wird.

Der Ist-Öffnungszeitpunkt wird bei einer weiteren mit geringem konstruktivem Aufwand durchführbaren Variante des erfindungsgemäßen Verfahrens über eine Positionssensoreinrichtung ermittelt, über die während der Öffnungsphase des formschlüssigen Schaltelementes, während der ein Formschluss zwischen zwei Schaltelementhälften des formschlüssigen Schaltelementes durch eine Relativbewegung in axialer Richtung zwischen den Schaltelementen aufgehoben wird, jeweils eine aktuelle axiale Position der Schaltelementhälften zueinander ermittelbar ist.

Bei dieser Variante ist der Ist-Öffnungszeitpunkt des abzuschaltenden formschlüssigen Schaltelementes während der Durchführung des angeforderten Übersetzungswechsels ausgehend von der Ist-Übersetzung in Richtung der Ziel-Übersetzung mit hoher Genauigkeit direkt im Bereich des formschlüssigen Schaltelementes zudem bauraum- und kostengünstig bestimmbar.

Ist dem formschlüssigen Schaltelement eine Drehmomentsensoreinrichtung zugeordnet, mittels der ein über das formschlüssige Schaltelement aktuell geführtes Drehmoment ermittelbar ist, wird bei einer weiteren vorteilhaften Variante des erfindungsgemäßen Verfahrens bei Vorliegen eines aktuell über das formschlüssige Schaltelement geführten Drehmomentes kleiner als eine definierte Drehmomentschwelle der Ist-Öffnungszeitpunkt mit geringem konstruktivem Aufwand bestimmt.

Ist dem formschlüssigen Schaltelement eine Drehzahlsensoreinrichtung zugeordnet, mittels der eine Differenzdrehzahl zwischen den Schaltelementhälften des formschlüssigen Schaltelementes ermittelbar ist, ist bei Vorliegen einer aktuellen Differenzdrehzahl größer als eine definierte Differenzdrehzahlschwelle der Ist-Öffnungszeitpunkt auf kostengünstige Art und Weise bestimmbar, da Getriebevorrichtungen üblicherweise mit Drehzahlsensoreinrichtungen zur Bestimmung von Drehzahlen von Bauteilen ausgeführt sind.

Bei einer weiteren vorteilhaften Variante des erfindungsgemäßen Verfahrens wird über eine Beschleunigungssensoreinrichtung ein Ist-Verlauf der Beschleunigung eines mit der Getriebevorrichtung ausgeführten Fahrzeuges während der Durchführung des Übersetzungswechsels bestimmt, womit eine Bewertung der Schaltgüte des Übersetzungswechsels auf einfache Art und Weise durchführbar ist.

Dabei wird während einer weiteren Variante des erfindungsgemäßen Verfahrens bei Ermitteln einer negativen Abweichung eines Soll-Verlaufes der Beschleunigung von dem über die Beschleunigungssensoreinrichtung bestimmten Ist-Verlauf der Beschleunigung des Fahrzeuges während des Übersetzungswechsels ausgehend von der Ist-Übersetzung in Richtung der Ziel-Übersetzung bei gleichzeitiger Ermittlung eines Ist-Öffnungszeitpunktes des zuzuschaltenden formschlüssigen Schaltelementes, der zeitlich vor dem Soll-Öffnungszeitpunkt liegt, um einen Zeitwert verkleinert und die Betätigung des formschlüssigen Schaltelementes in Bezug auf den Soll-Öffnungszeitpunkt des formschlüssigen Schaltelementes bei einem folgenden Übersetzungswechsel ausgehend von der Ist-Übersetzung in Richtung der Ziel-Übersetzung um den Zeitwert später gestartet, um eine Schaltgüte zu verbessern.

Im Gegensatz dazu wird bei einer weiteren vorteilhaften Variante des erfindungsgemäßen Verfahrens zur Verbesserung der Schaltgüte bei Ermitteln einer negativen Abweichung eines Soll-Verlaufes der Beschleunigung von dem über die Beschleunigungssensoreinrichtung bestimmten Ist-Verlaufes der Beschleunigung des Fahrzeuges während des Übersetzungswechsels ausgehend von der Ist-Übersetzung in Richtung der Ziel-Übersetzung bei gleichzeitiger Ermittlung eines Ist-Öffnungszeitpunktes, der zeitlich nach dem Soll-Öffnungszeitpunkt liegt, um einen Zeitwert vergrößert und die Betätigung des formschlüssigen Schaltelementes in Bezug auf den Soll-Öffnungszeitpunkt des formschlüssigen Schaltelementes bei einem folgenden Übersetzungswechsel ausgehend von der Ist-Übersetzung in Richtung der Ziel-Übersetzung um den Zeitwert früher gestartet.

Um die Schaltgüte beeinträchtigende antriebsstrangseitige Reaktionen, die aus einer zu frühen oder zu späten Betätigung des formschlüssigen Schaltelementes resultieren, innerhalb weniger Adaptionsschleifen sicher ausgleichen zu können, wird der Zeitwert bei einer weiteren vorteilhaften Variante des erfindungsgemäßen Verfahrens in Abhängigkeit der Höhe des Betrages der während der Durchführung des Übersetzungswechsels ausgehend von der Ist-Übersetzung in Richtung der Ziel-Übersetzung über die Beschleunigungssensoreinrichtung bestimmten Beschleunigung variiert.

Um die erfindungsgemäße Adaption des Losschiebezeitpunktes bzw. des Beginns der Betätigung des zu öffnenden formschlüssigen Schaltelementes bei gleichen Betriebsrahmenpunkten durchzuführen, wird der Soll-Öffnungszeitpunkt bei weiteren vorteilhaften Varianten des erfindungsgemäßen Verfahrens innerhalb eines vordefinierten Geschwindigkeitsbereiches eines mit der Getriebevorrichtung ausgeführten Fahrzeuges und/oder innerhalb eines vordefinierten Betriebstemperaturbereiches der Getriebevorrichtung adaptiert.

Sowohl die in den Patentansprüchen angegebenen Merkmale als auch die in den nachfolgenden Ausführungsbeispielen des erfindungsgemäßen Gegenstandes angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen.

Es zeigt:
- Fig. 1: ein Radsatzschema einer Getriebevorrichtung;
- Fig. 2: eine tabellarische Schaltlogik der in Fig. 1 gezeigten Getriebevorrichtung; und
- Fig. 3: mehrere Verläufe verschiedener Betriebszustandsparameter der Getriebevorrichtung gemäß Fig. 1 während der Durchführung einer angeforderten Schaltung, während der ein formschlüssiges Schaltelement abgeschaltet wird.

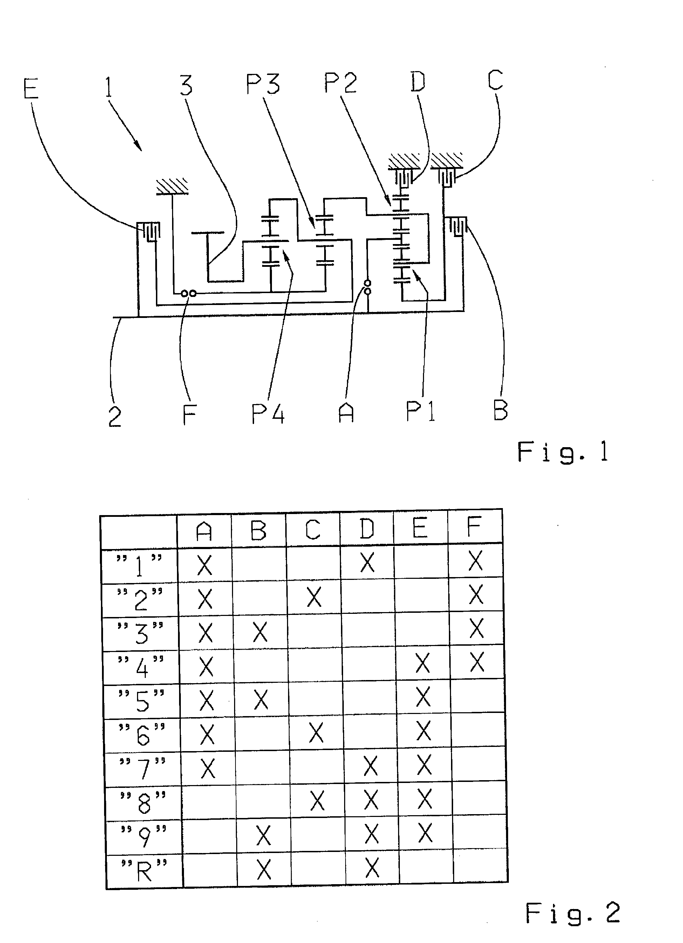

Fig. 1 zeigt ein Räderschema einer Getriebevorrichtung 1 bzw. eines Mehrstufengetriebes, welches grundsätzlich aus der DE 10 2008 000 429 A1 bekannt ist. Die Getriebevorrichtung 1 umfasst eine Antriebswelle 2 und eine Abtriebswelle 3, welche in in einem Fahrzeug montierten Zustand mit einem Abtrieb des Fahrzeugs verbunden ist, während die Antriebswelle 2 mit einer Antriebsmaschine wirkverbunden ist.

Darüber hinaus umfasst die Getriebevorrichtung 1 vier Planetenradsätze P1 bis P4, wobei der erste und der zweite Planetenradsatz P1, P2, die vorzugsweise als Minusplanetensätze ausgebildet sind, einen schaltbaren Vorschaltradsatz bilden, während der dritte und der vierte Planetenradsatz P3 und P4 den Hauptradsatz darstellen. Zusätzlich umfasst die Getriebevorrichtung 1 sechs Schaltelemente A bis F, wovon die Schaltelemente C, D und F als Bremsen und die Schaltelemente A, B und E als Schaltkupplungen ausgeführt sind.

Mit den Schaltelementen A bis F ist gemäß der in Fig. 2 näher dargestellten Schaltlogik ein selektives Schalten von neun Vorwärtsgängen "1" bis "9" und einem Rückwärtsgang "R" realisierbar, wobei zum Herstellen eines Kraftflusses in der Getriebevorrichtung 1 jeweils gleichzeitig drei Schaltelemente in einen geschlossenen Betriebszustand zu führen bzw. zu halten sind.

Die Schaltelemente A und F sind vorliegend als formschlüssige Schaltelemente ohne zusätzliche Synchronisierung ausgebildet, um im Betrieb der Getriebevorrichtung 1 im Vergleich zu Getriebevorrichtungen, die nur mit reibschlüssigen Schaltelementen ausgebildet sind, durch geöffnete reibschlüssige Schaltelemente verursachte Schleppmomente zu reduzieren. Da formschlüssige Schaltelemente im Allgemeinen nur innerhalb eines sehr schmalen Betriebszustandsfensters nahe ihres lastfreien Betriebszustandes aus einem geschlossenen Betriebszustand in einen geöffneten Betriebszustand überführbar sind, wird der lastfreie Betriebszustand eines abzuschaltenden formschlüssigen Schaltelementes ohne zusätzliche konstruktive Ausführungen durch entsprechende Betätigung der jeweils an der Schaltung beteiligten Schaltelemente realisiert. Dies gilt sowohl für Zug- als auch für Schubschaltungen, wobei die formschlüssigen Schaltelemente als Klauenkupplungen ausgeführt sein können, welche mit oder ohne zusätzliche Synchronisierung ausgebildet sind.

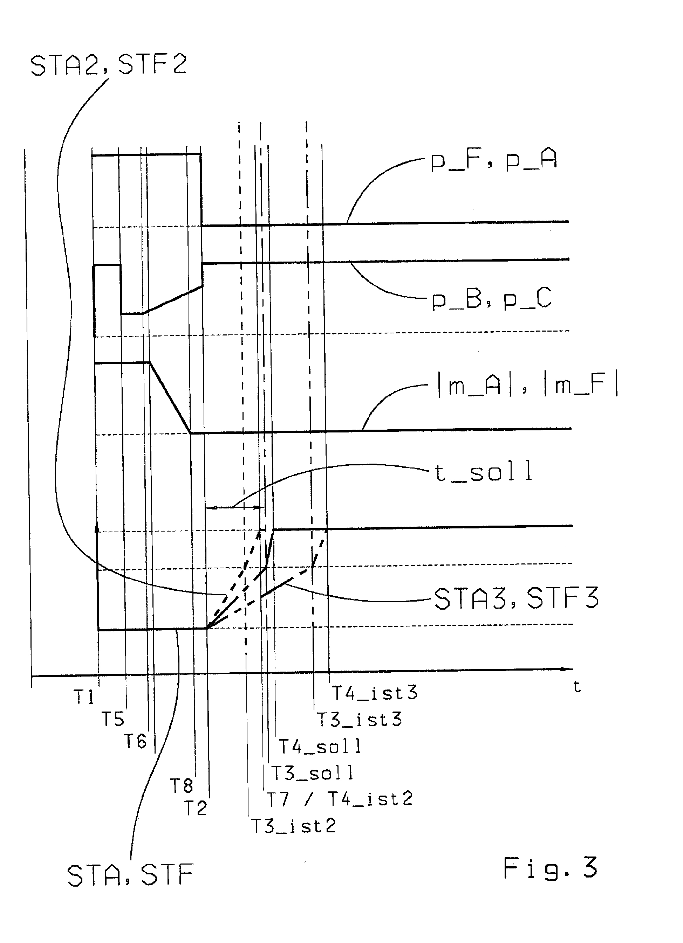

Die Wirkungsweise des erfindungsgemäßen Verfahrens wird anhand der in Fig. 3 über der Zeit t näher dargestellten Betriebszustandsverläufe mehrerer Betriebsparameter der Getriebevorrichtung 1 gemäß Fig. 1 näher erläutert. Das erfindungsgemäße Verfahren ist sowohl für die Überwachung und Betätigung des formschlüssigen Schaltelementes F während eines angeforderten Übersetzungswechsels ausgehend von der vierten Übersetzung "4" in Richtung der fünften Übersetzung "5", zu deren Durchführung das reibschlüssige Schaltelement B zuzuschalten ist und das formschlüssige Schaltelement F abzuschalten ist, als auch für die Überwachung und Betätigung des formschlüssigen Schaltelementes A bei einem angeforderten Übersetzungswechsel ausgehend von der siebten Übersetzung "7" in Richtung der achten Übersetzungsstufe "8" anwendbar, zu deren Durchführung das reibschlüssige Schaltelement C zuzuschalten ist und das formschlüssige Schaltelement A abzuschalten ist.

Zu einem Zeitpunkt T1 ist in der Getriebevorrichtung 1 die vierte Übersetzung "4" oder die siebte Übersetzung "7" für Vorwärtsfahrt eingelegt. Zum Zeitpunkt T1 ergeht eine Anforderung für einen Übersetzungswechsel ausgehend von der aktuell eingelegten Ist-Übersetzung "4" oder "7" in Richtung der fünften Übersetzung "5" oder der achten Übersetzung "8" für Vorwärtsfahrt bzw. der Ziel-Übersetzung, wobei hierfür das reibschlüssige Schaltelement B oder das Schaltelement C zu schließen ist und gleichzeitig das formschlüssige Schaltelement F oder das Schaltelement A aus seinem geschlossenen Betriebszustand in seinen geöffneten Betriebszustand zu überführen ist.

Ab dem Zeitpunkt T1 wird die Übertragungsfähigkeit des reibschlüssigen Schaltelementes B oder C durch entsprechendes Erhöhen des Betätigungsdruckes p_B oder p_C vergrößert. Hierfür wird der Betätigungsdruck p_B oder p_C ab dem Zeitpunkt T1 sprungartig auf ein Schnellfülldruckniveau angehoben und während einer bis zu einem Zeitpunkt T5 andauernden Schnellfüllphase auf diesem Druckniveau gehalten. Anschließend wird der Betätigungsdruck p_B bzw. p_C sprungartig auf ein Füllausgleichsdruckniveau geführt und während einer bis zu einem folgenden Zeitpunkt T6 andauernden Füllausgleichsphase auf diesem Druckniveau belassen, wobei das zuzuschaltende Schaltelement B oder C zum Zeitpunkt T6 einen Betriebszustand aufweist, zu dem die Übertragungsfähigkeit im Wesentlichen wenigstens annähernd gleich Null ist und von dem ausgehend eine Druckerhöhung einen sofortigen Anstieg der Übertragungsfähigkeit zur Folge hat. Wiederum anschließend wird der Betätigungsdruck p_B bzw. p_C des zuzuschaltenden Schaltelementes B oder C ab dem Zeitpunkt T6 über eine bis zu einem Zeitpunkt T7 andauernde Druckrampe auf ein Zwischendruckniveau geführt, womit die Übertragungsfähigkeit des zuzuschaltenden Schaltelementes B oder C angehoben wird und zunehmend Drehmoment über das zuzuschaltende reibschlüssige Schaltelement B oder C geführt wird.

Die vorbeschriebene Betätigung des zuzuschaltenden Schaltelementes B oder C führt wiederum dazu, dass das am abzuschaltenden formschlüssigen Schaltelement F oder A anliegende Drehmoment, dessen betragsmäßiger Verlauf |m_F| bzw. |m_A| in Fig. 3 gezeigt ist, ab dem Zeitpunkt T6 reduziert wird und zu einem Zeitpunkt T8 wenigstens annähernd gleich Null ist, womit sich das abzuschaltende formschlüssige Schaltelement F oder A in einem für die Abschaltung erforderlichen Betriebszustandsbereich befindet.

Zu einem zeitlich auf den Zeitpunkt T8 folgenden weiteren Zeitpunkt T2 wird ein Betätigungsdruck p_F des formschlüssigen Schaltelementes F oder ein Betätigungsdruck p_A des formschlüssigen Schaltelementes A sprungartig von seinem Schließdruckniveau auf ein Öffnungsdruckniveau abgesenkt, um das formschlüssige Schaltelement F oder das formschlüssige Schaltelement A aus seinem geschlossenen Betriebszustand in seinen geöffneten Betriebszustand entsprechend der vorliegenden Anforderung für den Übersetzungswechsel bzw. die Hochschaltung ausgehend von der vierten Übersetzungsstufe "4" oder der siebten Übersetzung "7" in Richtung der fünften Übersetzungsstufe "5" oder der achten Übersetzung "8" umzusetzen. Das sprungartige Reduzieren des Betätigungsdruckes p_F oder p_A des formschlüssigen Schaltelementes F oder des Schaltelementes A stellt den Beginn einer Öffnungsphase des formschlüssigen Schaltelementes F oder des formschlüssigen Schaltelementes A dar, während welcher ein Formschluss zwischen den beiden Schaltelementhälften durch eine Relativbewegung in axialer Richtung zwischen den Schaltelementhälften aufgehoben wird.

Die jeweils vorliegende aktuelle Stellung zwischen den beiden Schaltelementhälften des formschlüssigen Schaltelementes F oder des formschlüssigen Schaltelementes A wird über eine dem formschlüssigen Schaltelement F oder dem formschlüssigen Schaltelement A zugeordnete Positionssensoreinrichtung überwacht, über die jeweils eine aktuelle axiale Position der Schaltelementhälften zueinander bestimmbar ist.

Das Reduzieren des Betätigungsdruckes p_F bzw. p_A bewirkt das Verschieben einer der Schaltelementhälften des formschlüssigen Schaltelementes F oder A von der anderen nicht verschiebbar ausgeführten Schaltelementhälfte weg. Die aktuelle Position der verschiebbar ausgeführten Schaltelementhälfte des formschlüssigen Schaltelementes F oder A wird durch den in Fig. 3 gezeigten Verlauf STF oder STA grafisch wiedergegeben, wobei die verschiebbar ausgeführte Schaltelementhälfte des formschlüssigen Schaltelementes F oder A vor dem Zeitpunkt T2 sich in ihrer ersten Endstellung befindet, die zum vollständig geschlossenen Betriebszustand des formschlüssigen Schaltelementes F oder A äquivalent ist. Ab dem Zeitpunkt T2 wird die verschiebbar ausgeführte Schaltelementhälfte des formschlüssigen Schaltelementes F oder A aufgrund des reduzierten Betätigungsdrucks p_F oder p_A in Richtung ihres zweiten Endanschlages verschoben, der eine zu dem vollständig geöffneten Betriebszustand des formschlüssigen Schaltelementes F oder A äquivalente Stellung der verschiebbaren Schaltelementhälfte darstellt.

Die durch den angeforderten Übersetzungswechsel ausgehend von der Ist-Übersetzung "4" bzw. "7" in Richtung der Ziel-Übersetzung "5" bzw. "8" durchzuführende Auflösung des Formschlusses im Bereich des formschlüssigen Schaltelementes F oder A wird nach Ablauf einer vordefinierten Soll-Öffnungszeit t_soll zu einem vordefinierten Soll-Öffnungszeitpunkt T3_soll erwartet.

Kurz vor dem Soll-Öffnungszeitpunkt T3_soll weist die verschiebbar ausgeführte Schaltelementhälfte des formschlüssigen Schaltelementes F oder A in Bezug auf die nicht verschiebbar ausgeführte Schaltelementhälfte eine Position auf, zu der die Schaltelementhälften des formschlüssigen Schaltelementes F oder A sich gerade noch in formschlüssigem Eingriff miteinander befinden. Ausgehend von der Position der verschiebbar ausgeführten Schaltelementhälfte des formschlüssigen Schaltelementes F oder A kurz vor dem Soll-Öffnungszeitpunkt T3_soll führt ein weiteres axiales Verfahren der verschiebbar ausgeführten Schaltelementhälfte von der nicht verschiebbar ausgeführten Schaltelementhälfte weg zum Trennen des teilweisen Formschlusses zum Soll-Öffnungszeitpunkt T3_soll zwischen den Schaltelementhälften des formschlüssigen Schaltelementes F oder A, wobei das formschlüssige Schaltelement F oder A zum Soll-Öffnungszeitpunkt T4_soll, zu welchem die verschiebbar ausgeführte Schaltelementhälfte ihre zum vollständig geöffneten Betriebszustand des formschlüssigen Schaltelementes F oder A äquivalente zweite Endstellung erreicht, vollständig geöffnet ist.

Während der Durchführung des Übersetzungswechsels ausgehend von der Ist-Übersetzung "4" bzw. "7" in Richtung der Ziel-Übersetzung "5" bzw. "8" wird in Abhängigkeit des Verlaufes STF bzw. STA, die jeweils eine Betriebszustandsgröße der Getriebevorrichtung 1 darstellen, ausgehend vom Zeitpunkt T2, der den Beginn der Betätigung des formschlüssigen Schaltelementes F oder A darstellt, ein Ist-Öffnungszeitpunkt ermittelt, zu dem im Bereich des formschlüssigen Schaltelementes F oder A der angeforderte Formschluss aufgehoben ist.

Wird der angeforderte Übersetzungswechsel zwischen den Zeitpunkten T2 und T4_soll entsprechend der in der Getriebesteuerung der Getriebevorrichtung 1 hinterlegten Soll-Vorgabe durchgeführt, stellt sich der unter dem Bezugszeichen STF1 bzw. STA1 näher gekennzeichnete Verlauf ein, wobei der Ist-Öffnungszeitpunkt des formschlüssigen Schaltelemente F oder A dann dem Soll-Öffnungszeitpunkt T3_soll entspricht.

Unter dem Bezugszeichen STF2 bzw. STA2 ist ein von dem Soll-Verlauf STF1 bzw. STA1 abweichender Ist-Verlauf gezeigt, der sich während der Durchführung des angeforderten Übersetzungswechsels einstellt, wenn im Bereich des formschlüssigen Schaltelementes F oder A durch Anliegen des Betätigungsdruckes p_F oder p_A bereits vor dem Soll-Öffnungszeitpunkt T3_soll der Formschluss aufgehoben ist. In diesem Fall weicht der Ist-Öffnungszeitpunkt T3_ist2 des formschlüssigen Schaltelementes F oder A vom Soll-Öffnungszeitpunkt T3_soll in der in Fig. 3 dargestellten Art und Weise ab, wobei das formschlüssige Schaltelement F oder A dann auch zu einem früheren Zeitpunkt T4_ist2 vollständig geöffnet ist.

Ein weiterer mit dem Bezugszeichen STF3 bzw. STA3 näher bezeichneter Ist-Verlauf der Position der verschiebbar ausgeführten Schaltelementhälfte des formschlüssigen Schaltelementes F oder A stellt sich nach dem Zeitpunkt T2 ein, wenn der durch den angeforderten Übersetzungswechsel aufzuhebende Formschluss im Bereich des formschlüssigen Schaltelementes F oder A erst zu einem Ist-Öffnungszeitpunkt T3_ist3 getrennt ist, der zeitlich auf den Soll-Öffnungszeitpunkt T3_soll folgt, wobei das formschlüssige Schaltelement F oder A dann auch erst zu einem Zeitpunkt T4_ist3 vollständig geöffnet ist, zu welchem die verschiebbar ausgeführte Schaltelementhälfte ihre zum vollständig geöffneten Betriebszustand des formschlüssigen Schaltelementes F oder A äquivalente zweite Endstellung erreicht hat.

Zum Zeitpunkt T2, ab welchem die Betätigung des formschlüssigen Schaltelementes F oder A beginnt, wird gleichzeitig eine Zeitüberwachung gestartet, die in Verbindung mit dem Sensorsignal der Positionssensoreinrichtung zur Bestimmung des Ist-Öffnungszeitpunktes T3_ist2 bzw. T3_ist3 in der nachfolgend näher beschriebenen Art und Weise verwendet wird.

Zwischen dem Zeitpunkt T2 und dem SollÖffnungszeitpunkt T3_soll, dem Ist-Öffnungszeitpunkt T3_ist2 oder dem Ist-Öffnungszeitpunkt T3_ist3 liegt im Bereich des aufgrund des angeforderten Übersetzungswechsels zu öffnenden formschlüssigen Schaltelementes F oder A ein Formschluss vor, weshalb die verschiebbar ausgeführte Schaltelementhälfte des formschlüssigen Schaltelementes F oder A in diesem Bereich mit einer geringeren Verstellgeschwindigkeit bewegt wird als nach dem Soll-Öffnungszeitpunkt T3_soll oder dem jeweiligen Ist-Öffnungszeitpunkt T3_ist2 bzw. T3_ist3. Dies resultiert aus der Tatsache, dass vor dem Soll-Öffnungszeitpunkt T3_soll oder dem Ist-Öffnungszeitpunkt T3_ist2 bzw. T3_ist3, vor welchem die beiden Schaltelementhälften des formschlüssigen Schaltelementes F oder A formschlüssig miteinander in Eingriff stehen, die Verstellgeschwindigkeit aufgrund des vorliegenden Reibkontaktes zwischen den Schaltelementhälften des formschlüssigen Schaltelementes F oder A abgebremst wird.

Damit sind der Soll-Öffnungszeitpunkt T3_soll oder der Ist-Öffnungszeitpunkt T3_ist2 bzw. T3_ist3 mit Erkennen der Veränderung des Gradienten des Verlaufes STF2 bzw. STA2 oder STF3 bzw. STA3 in Verbindung mit der Zeitüberwachung exakt bestimmbar.

Der aktuell ermittelte Ist-Öffnungszeitpunkt T3_ist2 bzw. T3_ist3 wird jeweils dem Soll-Öffnungszeitpunkt T3_soll gegenübergestellt. Bei einer Ermittlung einer eine Schaltgüte des durchgeführten Übersetzungswechsels beeinträchtigenden Abweichung zwischen dem Ist-Öffnungszeitpunkt T3_ist2 bzw. T3_ist3 und dem Soll-Öffnungszeitpunkt T3_soll wird die Soll-Öffnungszeit t_soll um einen Zeitwert verändert und der Beginn der Betätigung bzw. der Zeitpunkt T2 des formschlüssigen Schaltelementes F oder A für einen folgenden Übersetzungswechsel ausgehend von der Ist-Übersetzung "4" bzw. "7" in Richtung der Ziel-Übersetzung "5" bzw. "8" um den Zeitwert in Bezug auf den Soll-Öffnungszeitpunkt T3_soll verschoben.

Die Schaltgüte beeinträchtigende Abweichungen zwischen dem Soll-Öffnungszeitpunkt T3_soll und dem Ist-Öffnungszeitpunkt T3_ist2 bzw. T3_ist3 sind von einem Fahrer eines mit der Getriebevorrichtung 1 ausgeführten Fahrzeuges beispielsweise in Form von Unstetigkeiten im Verlauf der Fahrzeugbeschleunigung, wie einem Schaltrucken oder dergleichen, wahrnehmbar und werden vom Fahrer als störend empfunden.

Zur Ermittlung einer eine Schaltgüte beeinträchtigenden Abweichung ist eine Beschleunigungssensoreinrichtung vorgesehen, über die ein Ist-Verlauf der Beschleunigung eines mit der Getriebevorrichtung 1 ausgeführten Fahrzeuges während der Durchführung des Übersetzungswechsels bestimmbar ist.

Wird während der Durchführung des Übersetzungswechsels eine durch den Übersetzungswechsel ausgelöste negative Abweichung des Ist-Verlaufes der Längsbeschleunigung des Fahrzeuges vom Soll-Verlauf ermittelt, die durch einen in Bezug auf den Soll-Öffnungszeitpunkt T3_soll zum Ist-Öffnungszeitpunkt T3_ist2 zu früh getrennten Formschluss im Bereich des formschlüssigen Schaltelementes F oder A verursacht wird, wird die Soll-Öffnungszeit t_soll um den Zeitwert verkleinert und die Betätigung des formschlüssigen Schaltelementes F oder A in Bezug auf den Soll-Öffnungszeitpunkt T3_soll des formschlüssigen Schaltelementes F oder A bei einem folgenden Übersetzungswechsel ausgehend von der Ist-Übersetzung "4" bzw. "7" in Richtung der Ziel-Übersetzung "5" bzw. "8" um den Zeitwert später gestartet.

Im Gegensatz dazu wird bei Ermitteln einer durch den Übersetzungswechsel ausgelösten negativen Abweichung des Ist-Verlaufes der Längsbeschleunigung des Fahrzeuges vom Soll-Verlauf, die durch einen in Bezug auf den Soll-Öffnungszeitpunkt T3_soll zum Ist-Öffnungszeitpunkt T3_ist3 zu spät aufgelösten Formschluss im Bereich des formschlüssigen Schaltelementes F oder A verursacht wird, die Soll-Öffnungszeit t_soll um den Zeitwert vergrößert und die Betätigung des formschlüssigen Schaltelementes in Bezug auf den Soll-Öffnungszeitpunkt T3_soll des formschlüssigen Schaltelementes F oder A bei einem folgenden Übersetzungswechsel ausgehend von der Ist-Übersetzung "4" oder "7" in Richtung der Ziel-Übersetzung "5" oder "8" um den Zeitwert früher gestartet. Letztbeschriebene Vorgehensweise resultiert aus der Tatsache, dass eine negative Beschleunigung des Fahrzeuges durch ein in Bezug auf den Soll-Öffnungszeitpunkt T3_soll zu spätes Öffnen des formschlüssigen Schaltelementes F oder A, beispielsweise zum Ist-Öffnungszeitpunkt T3_ist3, verursacht wird und die in der Getriebesteuerung hinterlegte Sollvorgabe zur Verbesserung der Schaltgüte entsprechend zu verändern ist.

In Abhängigkeit des jeweils vorliegenden Anwendungsfalles wird der Zeitwert in Abhängigkeit der Höhe des Betrages der während der Durchführung des Übersetzungswechsels ausgehend von der Ist-Übersetzung "4" oder "7" in Richtung der Ziel-Übersetzung "5" oder "8" über die Beschleunigungssensoreinrichtung bestimmten Fahrzeuglängsbeschleunigung dahingehend variiert, dass die Soll-Öffnungszeit t_soll bei höheren Beträgen der ermittelten Beschleunigung um größere Zeitwerte verändert wird als bei kleineren Beträgen.

Sowohl ein in Bezug auf die Sollvorgabe zu frühes als auch ein zu spätes Öffnen des formschlüssigen Schaltelementes F oder A resultiert beispielsweise aus Applikationsfehlern, die über die vorbeschriebene Vorgehensweise auf einfache Art und Weise innerhalb kurzer Betriebszeiten ausgleichbar sind.

Zur Verbesserung der Schaltgüte wird die Soll-Öffnungszeit t_soll bei Ermitteln einer positiven Differenz zwischen dem Ist-Öffnungszeitpunkt T3_ist3 und dem Soll-Öffnungszeitpunkt T3_soll um den Zeitwert vergrößert und die Betätigung des formschlüssigen Schaltelementes F oder A in Bezug auf den Soll-Öffnungszeitpunkt T3_soll des formschlüssigen Schaltelementes F oder A bei einem folgenden Übersetzungswechsel ausgehend von der Ist-Übersetzung "4" oder "7" in Richtung der Ziel-Übersetzung "5" oder "8" um den Zeitwert früher gestartet. Im Gegensatz dazu wird die Soll-Öffnungszeit t_soll bei Ermitteln einer negativen Differenz zwischen dem Ist-Öffnungszeitpunkt T3_ist2 und dem Soll-Öffnungszeitpunkt T3_soll um den Zeitwert verkleinert und die Betätigung des formschlüssigen Schaltelementes F oder A in Bezug auf den Soll-Öffnungszeitpunkt T3_soll des formschlüssigen Schaltelement F oder A bei einem folgenden Übersetzungswechsel ausgehend von der Ist-Übersetzung "4" oder "7" in Richtung der Ziel-Übersetzung "5" oder "8" um den Zeitwert später gestartet.

Alternativ oder kumulativ zu der vorbeschriebenen Vorgehensweise ist die Feststellung, ob der Formschluss im Bereich des zuzuschaltenden formschlüssigen Schaltelementes F oder A in Bezug auf den Soll-Öffnungszeitpunkt T3_soll zu früh oder zu spät aufgelöst wird, anstatt über eine Beschleunigungssensoreinrichtung oder zusätzlich dazu auch über eine Drehzahlsensoreinrichtung durchführbar, mittels der eine Getriebeeingangsdrehzahl der Getriebevorrichtung 1 während der Durchführung des angeforderten Übersetzungswechsels ausgehend von der Ist-Übersetzung "4" oder "7" in Richtung der Ziel-Übersetzung "5" oder "8" ermittelbar ist. Dabei wird ein zu frühes Abschalten des formschlüssigen Schaltelementes F oder A über die Drehzahlsensoreinrichtung ermittelt, wenn der Verlauf der Getriebeeingangsdrehzahl während der angeforderten Hochschaltung von einer Synchrondrehzahl der Getriebeeingangsdrehzahl, die sich bei eingelegter Ist-Übersetzung "4" oder "7" zum aktuellen Betriebspunkt der Getriebevorrichtung 1 einstellt, nicht in Richtung der Synchrondrehzahl verläuft, die sich bei eingelegter Ziel-Übersetzung "5" oder "8" einstellt. Dieser Fall liegt vor, wenn die Übertragungsfähigkeit des zuzuschaltenden reibschlüssigen Schaltelementes B oder C für die vorgesehene Lastübernahme noch zu gering ist.

Ein zu spätes Auslegen des formschlüssigen Schaltelementes F oder A in Bezug auf den Soll-Öffnungszeitpunkt T3_soll wird über die Drehzahlsensoreinrichtung dann ermittelt, wenn die Getriebeeingangsdrehzahl die Synchrondrehzahl der Getriebeeingangsdrehzahl der Ziel-Übersetzung "4" oder "7" nach dem Abschalten des formschlüssigen Schaltelementes F oder A mit großem Gradienten des Verlaufs der Getriebeeingangsdrehzahl auf das Niveau der Synchrondrehzahl der Getriebeeingangsdrehzahl der Ziel-Übersetzung "5" oder "8" geführt wird.

Zusätzlich besteht auch die Möglichkeit, den Ist-Öffnungszeitpunkt anstatt über die Positionssensoreinrichtung oder zusätzlich zur Verwendung des Signals der Positionssensoreinrichtung über eine Drehzahlsensoreinrichtung zu ermitteln, über die eine Getriebeeingangsdrehzahl und eine Getriebeausgangsdrehzahl bestimmbar sind. Dabei wird der Ist-Öffnungszeitpunkt bei Vorliegen eines Quotienten zwischen der Getriebeeingangsdrehzahl und der Getriebeausgangsdrehzahl ermittelt, der von dem Wert der Ist-Übersetzung "4" oder "7" abweicht. Bei dieser Vorgehensweise wird neben einem zu frühen oder zu späten Auflösen des Formschlusses im Bereich des zu öffnenden formschlüssigen Schaltelementes F oder A durch Heranziehen eines weiteren Sensorsignals, wie beispielsweise eines Signals einer Beschleunigungssensoreinrichtung oder einer Drehmomentsensoreinrichtung, über welche ein aktuell über das formschlüssige Schaltelement F oder A geführtes Drehmoment oder ein am Getriebeausgang anliegendes Drehmoment ermittelbar ist, zusätzlich eine Bewertung der Auswirkung durchgeführt, die durch das zu frühe oder zu späte Abschalten des formschlüssigen Schaltelementes F oder A generiert wird, wobei die Soll-Öffnungszeit t_soll dann ebenfalls in der vorbeschriebenen Art und Weise mit höheren oder kleineren Zeitwerten adaptierbar ist.

Wiederum in Abhängigkeit des jeweils vorliegenden Anwendungsfalles ist es bei einer weiteren Variante des erfindungsgemäßen Verfahrens vorgesehen, den Ist-Öffnungszeitpunkt über eine dem formschlüssigen Schaltelement zugeordnete Drehmomentsensoreinrichtung zu ermitteln, mittels der ein über das formschlüssige Schaltelemente aktuell geführtes Drehmoment bestimmbar ist. Dann wird der Ist-Öffnungszeitpunkt bei Vorliegen eines aktuell über das formschlüssige Schaltelement F oder A geführten Drehmomentes kleiner als eine definierte Drehmomentschwelle ermittelt, die vorzugsweise gleich Null ist, wobei eine Bewertung der Auswirkung eines zu frühen oder zu späten Abschaltens des formschlüssigen Schaltelementes F oder A wiederum über ein zusätzliches Sensorsignal, wie das Signal einer Beschleunigungssensoreinrichtung oder einer Drehzahlsensoreinrichtung, flankierend vorgesehen werden kann.

Ist dem formschlüssigen Schaltelement F oder A eine Drehzahlsensoreinrichtung zugeordnet, mittels der eine Differenzdrehzahl zwischen den Schaltelementhälften des formschlüssigen Schaltelementes ermittelbar ist, wird der Ist-Öffnungszeitpunkt bei Vorliegen einer aktuellen Differenzdrehzahl größer als eine definierte Differenzdrehzahlschwelle bestimmt, die vorzugsweise gleich Null ist. Auch bei dieser Variante des erfindungsgemäßen Verfahrens kann eine Bewertung der durch das zu frühe oder das zu späte Abschalten des formschlüssigen Schaltelementes F oder A ausgelösten antriebsstrangseitigen Reaktionsmomente in Abhängigkeit wenigstens eines weiteren Sensorsignals, wie das einer Längsbeschleunigungssensoreinrichtung zum Bestimmen einer Fahrzeugbeschleunigung, das einer weiteren Drehzahlsensoreinrichtung zur Ermittlung einer Getriebeeingangsdrehzahl und einer Getriebeausgangsdrehzahl oder das einer Drehmomentsensoreinrichtung zur Bestimmung des aktuell über das zu öffnende formschlüssige Schaltelement geführten Drehmomentes, durchgeführt werden.

Alternativ oder kumulativ zur zeitlichen Verschiebung des Beginns der Betätigung des abzuschaltenden formschlüssigen Schaltelementes F oder A besteht auch die Möglichkeit, die Betätigung des zuzuschaltenden Schaltelementes B oder C an den während der Durchführung des Übersetzungswechsels ermittelten Betriebszustandsverlauf des abzuschaltenden formschlüssigen Schaltelementes F oder A derart anzupassen, dass das formschlüssige Schaltelement F oder A wenigstens annähernd zum Soll-Öffnungszeitpunkt in den geöffneten Betriebszustand übergeht.

Bei der in Fig. 3 gezeigten Betätigung des zuzuschaltenden reibschlüssigen Schaltelementes B oder C wird der Betätigungsdruck p_B oder p_C bereits zum Zeitpunkt T7 vom Zwischendruckniveau, zu dem das zuzuschaltende reibschlüssige Schaltelement B oder C bereits vorzugsweise in ihrem schlupffreien Betriebszustand vorliegt, auf das Schließdruckniveau angehoben, zu dem das zuzuschaltende reibschlüssige Schaltelement B oder C seine volle Übertagungsfähigkeit aufweist, zu dem das reibschlüssige Schaltelement B oder C vollständig zugeschaltet ist und zu dem prinzipiell das gesamte über die Getriebevorrichtung 1 zu führende Drehmoment im Bereich des reibschlüssigen Schaltelementes B oder C übertragbar ist.

Dies führt dazu, dass am abzuschaltenden formschlüssigen Schaltelement trotz einer einwandfreien Betätigung des abzuschaltenden Schaltelementes F oder A ein den Abschaltvorgang beeinträchtigendes Drehmoment anliegt und in der Getriebevorrichtung 1 Verspannungszustände vorliegen, wenn der Formschluss im Bereich des abzuschaltenden formschlüssigen Schaltelementes F oder A zum Zeitpunkt T7 noch nicht getrennt ist. Diese Verspannungszustände können das Öffnen des abzuschaltenden formschlüssigen Schaltelementes F oder A verzögern, womit dieses nicht der Soll-Vorgabe entsprechend zum Soll-Öffnungszeitpunkt T3_soll in den geöffneten Betriebszustand übergeht.

Geht das abzuschaltende formschlüssige Schaltelement F oder A dann bei Vorliegen solcher Verspannungszustände zu einem späteren Zeitpunkt in seinen geöffneten Betriebszustand über, werden die Verspannungen schlagartig abgebaut und beeinträchtigen einen Fahrkomfort je nach Höhe des Verspannungszustandes in einem für den Fahrer unter Umständen spürbaren Umfang.

Um generell Verspannungszustände trotz einer der Soll-Vorgabe entsprechenden Betätigung des abzuschaltenden formschlüssigen Schaltelementes F oder A oder bei von der Soll-Vorgabe abweichenden Betätigungen des abzuschaltenden formschlüssigen Schaltelementes F oder A zu vermeiden, wird die Betätigung des zuzuschaltenden Schaltelementes B oder C jeweils an den ermittelten Betriebszustandsverlauf des abzuschaltenden formschlüssigen Schaltelementes F oder A während der Durchführung des Übersetzungswechsels derart angepasst, dass die eine ordnungsgemäße Abschaltung des abzuschaltenden formschlüssigen Schaltelementes behindernden Verspannungszustände durch das Zuschalten des reibschlüssigen Schaltelementes B oder C nicht verursacht werden.

Generell werden die vorbeschriebenen Varianten der erfindungsgemäßen Vorgehensweise sinnvollerweise nur bei Vorliegen eines stabilen Getriebeeingangsdrehzahlgradienten durchgeführt. Ergeht während der Adaption des Soll-Öffnungszeitpunktes eine fahrerseitige Leistungsanforderung oder betätigt der Fahrer ein Bremspedal, wird die Berechnung der Adaption verworfen.

Des Weiteren wird die Adaption grundsätzlich bei gleichen Betriebsrahmenpunkten, d. h. vorzugsweise innerhalb eines vordefinierten Geschwindigkeitsbereiches eines mit der Getriebevorrichtung 1 ausgeführten Fahrzeuges und/oder innerhalb eines vordefinierten Betriebstemperaturbereiches der Getriebevorrichtung 1 durchgeführt.

Durch die Anwendung der erfindungsgemäßen Vorgehensweise wird sichergestellt, dass eine geeignete Adaption ausgeglichen wird und so der Beginn der Betätigung des formschlüssigen Schaltelementes bzw. der Losschiebezeitpunkt zur Verbesserung einer Schaltgüte entsprechend verändert wird. Damit ist beispielsweise ein zu spätes Abschalten des formschlüssigen Schaltelementes bei zu hohem anliegendem Drehmoment mit all seinen negativen Auswirkungen, wie beispielsweise eine Beeinträchtigung eines gewünschten Schaltkomforts, mit geringem Steuer- und Regelaufwand vermeidbar.

Zur Durchführung des erfindungsgemäßen Verfahrens bzw. zur Adaption des Ansteuerzeitpunkts für einen Auslegevorgang eines formschlüssigen Schaltelementes werden Informationen von Sensoren, beispielsweise ein Beschleunigungssensorsignal bzw. ein Längsbeschleunigungssensorsignal, Drehmomentsensorsignale, Positionssensor- und/oder Drehzahlsensorsignale verwendet, wobei eines der Sensorsignale zur Durchführung der Bewertung ausreichend ist. Dennoch besteht die Möglichkeit eine differenziertere Bewertung mittels einer anwendungsfallabhängigen Kombination mehrerer Sensorsignale durchzuführen, wobei die einzelnen Bewertungen vorzugsweise mit unterschiedlicher Wertigkeit berücksichtigt werden können.

Grundsätzlich sind die vorbeschriebenen Varianten des erfindungsgemäßen Verfahrens auch zur Bestimmung eines zu frühen oder zu späten Ist-Öffnungszeitpunktes von formschlüssigen Schaltelementen geeignet, bei welchen beide Schaltelementhälften verfahrbar ausgeführt sind.

### Bezugszeichen

- 1: Getriebevorrichtung
- 2: Antriebswelle
- 3: Abtriebswelle
- "1" bis "9": Übersetzung für Vorwärtsfahrt
- A bis F: Schaltelement
- |m_A|, |m_F|: Verlauf des am abzuschaltenden formschlüssigen Schaltelement A oder F anliegenden Drehmomentes
- p_A, p_B, p_C, p_F: Betätigungsdruck
- P1 bis P4: Planetenradsatz
- "R": Übersetzung für Rückwärtsfahrt
- STA, STF: Verlauf der Position der verschiebbar ausgeführten Schaltelementhälfte des formschlüssigen Schaltelementes A oder F
- t: Zeit
- t_soll: Soll-Öffnungszeit
- T1, T2: diskreter Zeitpunkt
- T3_soll: Soll-Öffnungszeitpunkt
- T4_soll: endgültiger Soll-Öffnungszeitpunkt
- T3_ist2, T3_ist3: Ist-Öffnungszeitpunkt
- T4_ist2, T4_ist3: endgültiger Ist-Öffnungszeitpunkt
- T5 bis T8: diskreter Zeitpunkt

## Patentansprüche

1. Verfahren zum Betreiben einer Getriebevorrichtung (1) eines Fahrzeugantriebsstranges mit wenigstens einem formschlüssigen Schaltele-ment (A, F) und mit mehreren reibschlüssigen Schaltelementen (B, C, D, E), die zur Darstellung verschiedener Übersetzungen ("1" bis "R") zu- oder abgeschaltet werden, **dadurch gekennzeichnet, dass** bei Vorliegen einer Anforderung für einen Übersetzungswechsel von einer Ist-Übersetzung ("4" oder "7") in Richtung einer Ziel-Übersetzung ("5" oder "8"), wobei zur Durchführung des angeforderten Übersetzungswechsels das wenigstens eine formschlüssige Schaltelement (F oder A) abzuschalten ist und wenigstens eines der reibschlüssigen Schaltelemente (B oder C) zuzuschalten ist, wobei das durch den angeforderten Übersetzungswechsel zu öffnende formschlüssige Schaltelement (F oder A) nach Ablauf einer vordefinierten Soll-Öffnungszeit (t_soll) zu einem vordefinierten Soll-Öffnungszeit-punkt (T3_soll) in seinem geöffneten Betriebszustand vorliegen soll, wobei während der Durchführung des Übersetzungswechsels in Abhängigkeit einer Betriebszustandsgröße (STA oder STF) der Getriebevorrichtung (1) ausgehend von einem Beginn der Betätigung des formschlüssigen Schaltelementes (F oder A) in Richtung seines geöffneten Betriebszustandes ein Ist-Öffnungszeitpunkt (T3_ist2; T3_ist3) ermittelt wird, zu dem im Bereich des formschlüssigen Schaltelementes (F oder A) der angeforderte Formschluss aufgehoben ist, wobei der Ist-Öffnungszeitpunkt (T3_ist2; T3_ist3) dem Soll-Öffnungszeitpunkt (T3_soll) gegenübergestellt und bei einer Abweichung zwischen dem Ist-Öffnungszeitpunkt (T3_ist2; T3_ist3) und dem Soll-Öffnungszeit-punkt (T3_soll) die Soll-Öffnungszeit (t_soll) um einen Zeitwert verändert und der Beginn der Betätigung des formschlüssigen Schaltele-mentes (F oder A) um den Zeitwert in Bezug auf den Soll-Öffnungszeitpunkt (T3_soll) verschoben wird und/oder eine Betätigung des zuzuschaltenden Schaltelementes (B oder C) an einen ermittelten Betriebszustandsverlauf des abzuschaltenden formschlüssigen Schaltelementes (F oder A) angepasst wird, dass das formschlüssige Schaltelement (F oder A) wenigstens annähernd zum Soll-Öffnungszeit-punkt (T3_soll) in den geöffneten Betriebszustand übergeht.

2. Verfahren nach Anspruch 1, **dadurch gekennzeichnet, dass** die Soll-Öffnungszeit (t_soll) bei Ermitteln einer positiven Differenz zwischen dem Ist-Öffnungszeitpunkt (T3_ist2; T3_ist3) und dem Soll-Öffnungszeitpunkt (T3_soll) um den Zeitwert vergrößert wird und die Betätigung des formschlüssigen Schaltelementes (F oder A) in Bezug auf den Soll-Öffnungszeitpunkt (T3_soll) des formschlüssigen Schaltelementes (F oder A) bei einem folgenden Übersetzungswechsel ausgehend von der Ist-Übersetzung ("4" oder "7") in Richtung der Ziel-Übersetzung ("5" oder "8") um den Zeitwert früher gestartet wird.

3. Verfahren nach Anspruch 1 oder 2, **dadurch gekennzeichnet, dass** die Soll-Öffnungszeit (t_soll) bei Ermitteln einer negativen Differenz zwischen dem Ist-Öffnungszeitpunkt (T3_ist2; T3_ist3) und dem Soll-Öffnungszeitpunkt (T3_soll) um den Zeitwert verkleinert wird und die Betätigung des formschlüssigen Schaltelementes (F oder A) in Bezug auf den Soll-Öffnungszeitpunkt (T3_soll) des formschlüssigen Schaltelementes (F oder A) bei einem folgenden Übersetzungswechsel ausgehend von der Ist-Übersetzung ("4" oder "7") in Richtung der Ziel-Übersetzung ("5" oder "8") um den Zeitwert später gestartet wird.

4. Verfahren nach einem der Ansprüche 1 bis 3, **dadurch gekennzeichnet, dass** der Ist-Öffnungszeitpunkt über eine Drehzahlsensoreinrichtung bestimmt wird, über die eine Getriebeeingangsdrehzahl und eine Getriebeausgangsdrehzahl ermittelbar ist, wobei der Ist-Öffnungszeitpunkt bei Vorliegen eines Quotienten zwischen der Getriebeeingangsdrehzahl und der Getriebeausgangsdrehzahl, der von dem Wert der Ist-Übersetzung abweicht, ermittelt wird.

5. Verfahren nach einem der Ansprüche 1 bis 4, **dadurch gekennzeichnet, dass** der Ist-Öffnungszeitpunkt (T3_ist2; T3_ist3) über eine Positionssensoreinrichtung ermittelt wird, über die während der Öffnungsphase des formschlüssigen Schaltelementes (F oder A), während der zwischen zwei Schaltelementhälften des formschlüssigen Schaltelementes (F oder A) ein Formschluss durch eine Relativbewegung in axialer Richtung zwischen den Schaltelementhälften aufgehoben wird, jeweils eine aktuelle axiale Position der Schaltelementhälften zueinander ermittelbar ist.

6. Verfahren nach einem der Ansprüche 1 bis 5, **dadurch gekennzeichnet, dass** dem formschlüssigen Schaltelement eine Drehmomentsensoreinrichtung zugeordnet ist, mittels der ein über das formschlüssige Schaltelement aktuell geführtes Drehmoment ermittelbar ist, wobei bei Vorliegen eines aktuell über das formschlüssige Schaltelement geführten Drehmomentes kleiner als eine definierte Drehmomentschwelle der Ist-Öffnungszeitpunkt bestimmt wird.

7. Verfahren nach einem der Ansprüche 1 bis 6, **dadurch gekennzeichnet, dass** dem formschlüssigen Schaltelement eine Drehzahlsensoreinrichtung zugeordnet ist, mittels der eine Differenzdrehzahl zwischen den Schaltelementhälften des formschlüssigen Schaltelementes ermittelbar ist, wobei bei Vorliegen einer aktuellen Differenzdrehzahl größer als eine definierte Differenzdrehzahlschwelle der Ist-Öffnungszeitpunkt bestimmt wird.

8. Verfahren nach einem der Ansprüche 1 bis 7, **dadurch gekennzeichnet, dass** eine Beschleunigungssensoreinrichtung vorgesehen ist, mittels welcher ein Ist-Verlauf der Beschleunigung eines mit der Getriebevorrichtung (1) ausgeführten Fahrzeuges während der Durchführung des Übersetzungswechsels bestimmt wird.

9. Verfahren nach Anspruch 8, **dadurch gekennzeichnet, dass** bei Ermitteln einer negativen Abweichung eines Soll-Verlaufes der Beschleunigung von dem über die Beschleunigungssensoreinrichtung bestimmten Ist-Verlauf der Beschleunigung des Fahrzeuges während des Übersetzungswechsels ausgehend von der Ist-Übersetzung ("4" oder "7") in Richtung der Ziel-Übersetzung ("5" oder "8") bei gleichzeitiger Ermittlung eines Ist-Öffnungszeitpunktes (T3_ist3), der zeitlich vor dem Soll-Öffnungszeitpunkt (T3_soll) liegt, die Soll-Öffnungszeit (t_soll) um einen Zeitwert verkleinert wird und die Betätigung des formschlüssigen Schaltelementes (F oder A) in Bezug auf den Soll-Öffnungszeitpunkt (T3_soll) des formschlüssigen Schaltelementes (F oder A) bei einem folgenden Übersetzungswechsel ausgehend von der Ist-Übersetzung ("4" oder "7") in Richtung der Ziel-Übersetzung ("5" oder "8") um den Zeitwert später gestartet wird.

10. Verfahren nach Anspruch 8 oder 9, **dadurch gekennzeichnet, dass** bei Ermitteln einer negativen Abweichung eines Soll-Verlaufes der Beschleunigung von dem über die Beschleunigungssensoreinrichtung bestimmten Ist-Verlauf der Beschleunigung des Fahrzeuges während des Übersetzungswechsels ausgehend von der Ist-Übersetzung ("4" oder "7") in Richtung der Ziel-Übersetzung ("5" oder "8") bei gleichzeitiger Ermittlung eines Ist-Öffnungszeitpunktes (T3_ist3), der zeitlich nach dem Soll-Öffnungszeitpunkt (T3_soll) liegt, die Soll-Öffnungszeit (t_soll) um einen Zeitwert vergrößert wird und die Betätigung des formschlüssigen Schaltelementes (F oder A) in Bezug auf den Soll-Öffnungszeitpunkt (T3_soll) des formschlüssigen Schaltelementes (F oder A) bei einem folgenden Übersetzungswechsel ausgehend von der Ist-Übersetzung ("4" oder "7") in Richtung der Ziel-Übersetzung ("5" oder "8") um den Zeitwert früher gestartet wird.

11. Verfahren nach einem der Ansprüche 8 bis 10, **dadurch gekennzeichnet, dass** der Zeitwert in Abhängigkeit der Höhe des Betrages der während der Durchführung des Übersetzungswechsels ausgehend von der Ist-Übersetzung ("4" oder "7") in Richtung der Ziel-Übersetzung ("5" oder "8") über die Beschleunigungssensoreinrichtung bestimmten Beschleunigung variiert.

12. Verfahren nach einem der Ansprüche 1 bis 11, **dadurch gekennzeichnet, dass** der Soll-Öffnungszeitpunkt (T3_soll) innerhalb eines vordefinierten Geschwindigkeitsbereiches eines mit der Getriebevorrichtung (1) ausgeführten Fahrzeuges adaptiert wird.

13. Verfahren nach einem der Ansprüche 1 bis 12, **dadurch gekennzeichnet, dass** der Soll-Öffnungszeitpunkt (T3_soll) innerhalb eines vordefinierten Betriebstemperaturbereiches der Getriebevorrichtung adaptiert wird.

## Claims

1. Method for operating a transmission device (1) of a vehicle drive train having at least one positively locking shifting element (A, F) and a plurality of frictionally locking shifting elements (B, C, D, E) which are connected or disconnected in order to form different transmission ratios ("1" to "R"), **characterized in that** when a request for a change of transmission ratio from an actual transmission ratio ("4" or "7") in the direction of a target transmission ratio ("5" or "8") is present, wherein at least one positively locking shifting element (F or A) has to be disconnected and at least one of the frictionally locking shifting elements (B or C) has to be connected in order to carry out the requested change of transmission ratio, wherein the positively locking shifting element (F or A) which is to be opened by the requested change of transmission ratio is to be in its opened operating state after the expiry of a predefined specified opening time (t_spc) at a predefined specified opening point in time (T3_spc), wherein during the execution of the change in transmission ratio an actual opening point in time (T3_act2; T3_act3) is determined as a function of an operating state variable (STA or STF) of the transmission device (1) from the start of the activation of the positively locking shifting element (F or A) in the direction of its opened operating state, at which the requested positive engagement is to be cancelled in the region of the positively locking shifting element (F or A), wherein the actual opening point in time (T3_act2; T3_act3) is contrasted with the specified opening point in time (T3_spc), and in the event of a deviation between the actual opening point in time (T3_act2; T3_act3) and the specified opening point in time (T3_spc) the specified opening time (t_spc) is changed by a time value and the start of the activation of the positively locking shifting element (F or A) is shifted by the time value with respect to the specified opening point in time (T3_spc) and/or an activation of the shifting element (B or C) which is to be connected is adapted to a determined operating state profile of the positively locking shifting element (F or A) which is to be disconnected, **in that** the positively locking shifting element (F or A) goes into the opened operating state at least approximately at the specified opening point in time (T3_spc).

2. Method according to Claim 1,**characterized in that** the specified opening time (t_spc) is increased by the time value when a positive difference is determined between the actual opening point in time (T3_act2; T3_act3) and the specified opening point in time (T3_spc), and the activation of the positively locking shifting element (F or A) with respect to the specified opening point in time (T3_spc) of the positively locking shifting element (F or A) is started earlier by the time value when there is a subsequent change of transmission ratio from the actual transmission ratio ("4" or "7") in the direction of the target transmission ratio ("5" or "8").

3. Method according to Claim 1 or 2, **characterized in that** the specified opening time (t_spc) is reduced by the time value when a negative difference is determined between the actual opening point in time (T3_act2; T3_act3) and the specified opening point in time (T3_spc), and the activation of the positively locking shifting element (F or A) with respect to the specified opening point in time (T3_spc) of the positively locking shifting element (F or A) is started later by the time value when there is a subsequent change of transmission ratio from the actual transmission ratio ("4" or "7") in the direction of the target transmission ratio ("5" or "8").

4. Method according to one of Claims 1 to 3, **characterized in that** the actual opening point in time is determined by means of a rotational-speed sensor device by means of which a transmission input rotational speed and a transmission output rotational speed can be determined, wherein the actual opening point in time is determined when there is a quotient between the transmission input rotational speed and the transmission output rotational speed which differs from the value of the actual transmission ratio.

5. Method according to one of Claims 1 to 4, **characterized in that** the actual opening point in time (T3_act2; T3_act3) is determined by means of a position sensor device, by means of which, in each case a current axial position of the shifting element halves in relation to one another can be determined during the opening phase of the positively locking shifting element (F or A), during which a positive engagement between two shifting element halves of the positively locking shifting element (F or A) is cancelled as a result of a relative movement in the axial direction between the shifting element halves.

6. Method according to one of Claims 1 to 5, **characterized in that** a torque sensor device, by means of which a torque which is guided at that particular time by mean of the positively locking shifting element, can be determined, is assigned to the positively locking shifting element, wherein the actual opening point in time is determined when there is a torque which is guided at this particular time by means of shifting element and which is smaller than a defined threshold torque.

7. Method according to one of Claims 1 to 6, **characterized in that** a rotational-speed sensor device, by means of which a difference in rotational speed between the shifting element halves of the positively locking shifting element can be determined, wherein the actual opening point in time is determined when there is a current difference in rotational speed which is greater than a defined threshold for the difference in rotational speed.

8. Method according to one of Claims 1 to 7, **characterized in that** an acceleration sensor device is provided by means of which an actual profile of the acceleration of a vehicle which is embodied with the transmission device (1) is determined during the execution of the change in transmission ratio.

9. Method according to Claim 8, **characterized in that** when a negative deviation of a specified profile of the acceleration from the actual profile of the acceleration of the vehicle detected by means of the acceleration sensor device is determined during the change in transmission ratio starting from the actual transmission ratio ("4" or "7") in the direction of the target transmission ratio ("5" or "8") when an actual opening point in time (T3_act3) is determined simultaneously which is chronologically before the specified opening point in time (T3_spc), the specified opening time (T_spc) is reduced by a time value and the activation of the positively locking shifting element (F or A) with respect to the specified opening point in time (T3_spc) of the positively locking shifting element (F or A) is started later by the time value when there is a subsequent change in transmission ratio starting from the actual transmission ratio ("4" or "7") in the direction of the target transmission ratio ("5" or "8").

10. Method according to Claim 8 or 9, **characterized in that**, when a negative deviation of a specified profile of the acceleration from the actual profile of the acceleration of the vehicle detected by means of the acceleration sensor device is determined during the change in transmission ratio starting from the actual transmission ratio ("4" or "7") in the direction of the target transmission ratio ("5" or "8") when an actual opening point in time (T3_act3) is determined simultaneously which is chronologically after the specified opening point in time (T3_spc), the specified opening point in time (t_spc) is increased by a time value and the activation of the positively locking shifting element (F or A) with respect to the specified opening point in time (T3_spc) of the positively locking shifting element (F or A) is started earlier by the time value when there is a subsequent change in transmission ratio starting from the actual transmission ratio ("4" or "7") in the direction of the target transmission ratio ("5" or "8").

11. Method according to one of Claims 8 to 10, **characterized in that** the time value varies as a function of the absolute value of the acceleration which is detected during the execution of the change in transmission ratio starting from the actual transmission ratio ("4" or "7") in the direction of the target transmission ratio ("5" or "8") by means of the acceleration sensor device.

12. Method according to one of Claims 1 to 11, **characterized in that** the specified opening point in time (T3_spc) is adapted within a predefined speed range of a vehicle which is embodied with the transmission device (1).

13. Method according to one of Claims 1 to 12, **characterized in that** the specified opening point in time (T3_spc) is adapted within a predefined operating temperature range of the transmission device.

## Revendications

1. Procédé de conduite d'un ensemble de transmission (1) du train d'entraînement d'un véhicule automobile, qui présente au moins un élément (A, F) de changement de rapport en correspondance géométrique et plusieurs éléments (B, C, D, E) de changement de rapport en correspondance de frottement qui sont branchés ou débranchés pour établir différents rapports de transmission ("1" à "R"),
**caractérisé en ce que**
lorsqu'il existe une demande de changement de rapport de transmission depuis un rapport de transmission effectif ("4" ou "7") en direction d'un changement de rapport visé ("5" ou "8"), le ou les éléments (F ou A) de changement de rapport en correspondance géométrique devant être débranchés pour exécuter le changement de rapport de transmission demandé et au moins l'un des éléments (B ou C) de changement de rapport en correspondance de frottement devant être branché, l'élément (F ou A) de changement de rapport en correspondance géométrique qui doit être ouvert par le changement imposé de rapport de transmission devant se trouver dans sa position de fonctionnement ouverte après écoulement d'une durée prédéfinie d'ouverture de consigne (t_soll) jusqu'à un instant prédéfini de consigne d'ouverture (T3_soll),
un instant effectif d'ouverture (T3_ist2; T3_ist3) auquel la correspondance géométrique imposée est supprimée au niveau de l'élément de changement de rapport (F ou A) en correspondance géométrique étant déterminé pendant l'exécution du changement de rapport de transmission en fonction d'une grandeur d'état de fonctionnement (STA ou STF) de l'ensemble de transmission (1), partant du début de l'actionnement de l'élément de changement de rapport (F ou A) en correspondance géométrique en direction de son état de fonctionnement ouvert,
l'instant effectif d'ouverture (T3_ist2; T3_ist3) étant comparé à l'instant d'ouverture de consigne (T3_soll) et en cas d'écart entre l'instant effectif d'ouverture (T3_ist2; T3_ist3) et l'instant d'ouverture de consigne (T3_soll), l'instant de consigne d'ouverture (t_soll) étant modifié d'une valeur temporelle et le début de l'actionnement de l'élément de changement de rapport (F ou A) en correspondance géométrique étant déplacé de la valeur temporelle par rapport à l'instant de consigne d'ouverture (T3_soll) et/ou un actionnement de l'élément (B ou C) de changement de rapport à brancher étant adapté à l'évolution ainsi déterminée de l'état de fonctionnement de l'élément de changement de rapport (F ou A) en correspondance géométrique à débrancher, de telle sorte que l'élément (F ou A) de changement de rapport en correspondance géométrique passe dans l'état de fonctionnement ouvert au moins approximativement à l'instant d'ouverture de consigne (T3_soll).

2. Procédé selon la revendication 1, **caractérisé en ce que** l'instant d'ouverture de consigne (t_soll) est augmenté de la valeur temporelle lorsque la différence entre l'instant effectif d'ouverture (T3_ist2; T3_ist3) et l'instant d'ouverture de consigne (T3_soll) est positive, et l'actionnement de l'élément (F ou A) de changement de rapport en correspondance géométrique est lancé plus tôt de la valeur temporelle par rapport à l'instant d'ouverture de consigne (T3_soll) de l'élément (F ou A) de changement de rapport en correspondance géométrique lors du changement de rapport de transmission suivant, partant du changement effectif de rapport de transmission ("4" ou "7") en direction du rapport de transmission visé ("5" ou "8").

3. Procédé selon les revendications 1 ou 2, **caractérisé en ce que** l'instant d'ouverture de consigne (t_soll) est diminué de la valeur temporelle lorsque la différence entre l'instant effectif d'ouverture (T3_ist2; T3_ist3) et l'instant d'ouverture de consigne (T3_soll) est négative, et l'actionnement de l'élément (F ou A) de changement de rapport en correspondance géométrique est lancé plus tard de la valeur temporelle par rapport à l'instant d'ouverture de consigne (T3_soll) de l'élément (F ou A) de changement de rapport en correspondance géométrique lors du changement de rapport de transmission suivant, partant du changement effectif de rapport de transmission ("4" ou "7") en direction du rapport de transmission visé ("5" ou "8").

4. Procédé selon l'une des revendications 1 à 3, **caractérisé en ce que** l'instant effectif d'ouverture est déterminé par l'intermédiaire d'un dispositif de capteur de vitesse de rotation par lequel la vitesse de rotation à l'entrée de la transmission et la vitesse de rotation à la sortie de la transmission peuvent être déterminées, l'instant effectif d'ouverture étant déterminé en cas de présence d'un quotient entre la vitesse de rotation d'entrée de la transmission et la vitesse de rotation de sortie de la transmission qui s'écartent de la valeur du rapport de transmission effectif.

5. Procédé selon l'une des revendications 1 à 4, **caractérisé en ce que** l'instant effectif d'ouverture (T3_ist2; T3_ist3) est déterminé par l'intermédiaire d'un dispositif de capteur de position par lequel, pendant la phase d'ouverture de l'élément (F ou A) de changement de rapport en correspondance géométrique, pendant lequel une correspondance géométrique entre deux moitiés de l'élément (F ou A) de changement de rapport en correspondance géométrique est supprimée par un déplacement relatif dans la direction axiale entre les moitiés d'élément de changement de rapport, la position axiale effective des moitiés d'élément de changement de rapport l'une par rapport à l'autre peut être déterminée.

6. Procédé selon l'une des revendications 1 à 5, **caractérisé en ce qu'**un dispositif de capteur de couple de rotation est associé à l'élément de changement de rapport en correspondance géométrique, au moyen duquel un couple de rotation effectivement apporté par l'intermédiaire de l'élément de changement de rapport en correspondance géométrique peut être déterminé, la présence d'un couple de rotation apporté par l'intermédiaire de l'élément de changement de rapport en correspondance géométrique plus petit qu'un seuil défini de couple de rotation définissant l'instant effectif d'ouverture.

7. Procédé selon l'une des revendications 1 à 6, **caractérisé en ce qu'**un dispositif de capteur de vitesse de rotation au moyen duquel une différence de vitesse de rotation entre les moitiés de l'élément de changement de rapport en correspondance géométrique peut être déterminé est associé à l'élément de changement de rapport en correspondance géométrique, la présence d'une différence effective de vitesse de rotation supérieure à un seuil défini de différence de vitesse de rotation définissant l'instant effectif d'ouverture.

8. Procédé selon l'une des revendications 1 à 7, **caractérisé en ce qu'**un dispositif de capteur d'accélération est prévu au moyen duquel l'évolution effective de l'accélération d'un véhicule équipé de l'ensemble de transmission (1) pendant l'exécution du changement de rapport de transmission est déterminée.

9. Procédé selon la revendication 8, **caractérisé en ce que** si un écart négatif est déterminé entre l'évolution de consigne de l'accélération dans l'évolution effective, déterminée par le dispositif de capteur d'accélération, de l'accélération du véhicule pendant le changement de rapport de transmission, partant du rapport de transmission effectif ("4" ou "7") en direction du rapport de transmission visé ("5" ou "8"), en déterminant simultanément un instant effectif d'ouverture (T3_ist3) situé dans le temps avant l'instant d'ouverture de consigne (T3_soll), l'instant de consigne d'ouverture (t_soll) est diminué d'une valeur temporelle et l'actionnement de l'élément de changement de rapport (F ou A) en correspondance géométrique est lancé plus tard de la valeur temporelle par rapport à l'instant d'ouverture de consigne (T3_soll) de l'élément (F ou A) de changement de rapport en correspondance géométrique lors du changement de rapport de transmission suivant depuis le rapport de transmission effectif ("4" ou "7") en direction du rapport de transmission visé ("5" ou "8").

10. Procédé selon les revendications 8 ou 9, **caractérisé en ce que** si un écart négatif est déterminé entre l'évolution de consigne de l'accélération dans l'évolution effective, déterminée par le dispositif de capteur d'accélération, de l'accélération du véhicule pendant le changement de rapport de transmission, partant du rapport de transmission effectif ("4" ou "7") en direction du rapport de transmission visé ("5" ou "8"), en déterminant simultanément un instant effectif d'ouverture (T3_ist3) situé dans le temps après l'instant d'ouverture de consigne (T3_soll), l'instant de consigne d'ouverture (t_soll) est augmenté d'une valeur temporelle et l'actionnement de l'élément de changement de rapport (F ou A) en correspondance géométrique est lancé plus tôt de la valeur temporelle par rapport à l'instant d'ouverture de consigne (T3_soll) de l'élément (F ou A) de changement de rapport en correspondance géométrique lors du changement de rapport de transmission suivant depuis le rapport de transmission effectif ("4" ou "7") en direction du rapport de transmission visé ("5" ou "8").

11. Procédé selon l'une des revendications 8 à 10, **caractérisé en ce que** la valeur temporelle varie en fonction du niveau de l'accélération définie par le dispositif de capteur d'accélération pendant l'exécution du changement de rapport de transmission, partant du rapport de transmission effectif ("4" ou "7") et en direction du rapport de transmission visé ("5" ou "8").

12. Procédé selon l'une des revendications 1 à 11, **caractérisé en ce que** l'instant d'ouverture de consigne (T3_soll) est adapté à l'intérieur d'une plage prédéfinie de vitesse du véhicule équipé de l'ensemble de transmission (1).

13. Procédé selon l'une des revendications 1 à 12, **caractérisé en ce que** l'instant d'ouverture de consigne (T3_soll) est adapté à l'intérieur d'une plage prédéfinie de température de fonctionnement de l'ensemble de transmission.
